# EUROPEAN PATENT APPLICATION

(11) **EP 4 521 734 A1**
(43) Date of publication of application: **12.03.2025**
(21) Application number: 24193385.2
(22) Date of filing: 07.08.2024
(51) Int. Cl.: H04N 7/18, F21S 41/13, G06V 10/141

(54) **CAMERA MONITORING (CMS) SYSTEM FOR A VEHICLE, METHOD OF CONTROLLING THE CAMERA MONITORING (CMS) SYSTEM, AND VEHICLE**

(30) Priority: 08.08.2023 DE 102023121029
(71) Applicant: Motherson Innovations Company Ltd., London EC2N 2AX (GB)
(72) Inventor: Grauer, Manuel, London, EC2N 2AX (GB); Wieczorek, Romeo, London, EC2N 2AX (GB); Schad, Michael, London, EC2N 2AX (GB)
(74) Representative: Isarpatent

(57) **Abstract**

The present invention relates to a camera monitoring system (CMS) for a vehicle, comprising:
at least one camera configured to record a scene in a field of view (FOV) of the at least one camera;
an image processing device configured to identify an object, in particular a living being or a person, in the scene recorded by the at least one camera; and a control device configured to provide information to be used for control of an infrared lighting device configured to emit infrared light to light up the scene in the field of view (FOV) of the at least one camera (28) in such a way that infrared light illuminating an object upon identification of the object is reduced to at least one predetermined permissible emission power and/or is deflected away from the object.

## Description

### FIELD OF THE INVENTION

The invention relates to a camera monitoring (CMS) system for a vehicle, in particular a truck, car, bus or van. Further, the invention relates to a vehicle having such a camera monitoring (CMS) system and a method for controlling such a camera monitoring (CMS) system.

### TECHNICAL BACKGROUND

A camera mirror system for a vehicle is known from WO 2020/126396 A1. The camera mirror system comprises a camera having a field of view. The camera has a lens configured to focus light onto an image capture unit, and a filter switch. The filter switch has an infrared (IR) filter that is movable into and out of the optical path in response to an IR filter command. A display is in communication with the camera and is configured to display the field of view. An IR light emitting diode (LED) is configured to illuminate the field of view in response to an IR LED command. A controller is in communication with the image capture unit, the filter switch, and the IR LED. The controller is configured to provide the IR filter command and the IR LED command in response to a limited-use night vision condition based on a factor other than the amount of atmospheric light.

### SUMMARY OF THE INVENTION.

In view of the foregoing, the object of the present invention is to provide an improved camera monitoring (CMS) system, which allows higher emission levels when illuminating a field of view of an infrared sensitive camera by a respective infrared (IR) lamp, while preventing eye damage to a person from the infrared light when the person looks into the light cone of the infrared (IR) lamp.

According to the invention, this object is solved by a camera monitoring (CMS) system with the features of claim 1, by a vehicle with the features of claim 14, and by a method with the features of claim 15.

According to the invention, a camera monitoring (CMS) system for a vehicle is provided, comprising:
at least one camera configured to record a scene in a field of view (FOV) of the at least one camera; an image processing device configured to identify an object, in particular a living being or a person, in the scene recorded by the at least one camera; and
a control device configured to provide information to be used for control of an infrared lighting device configured to emit infrared light to light up the scene in the field of view (FOV) of the at least one camera in such a way that infrared light illuminating an object upon identification of the object is reduced to at least one predetermined permissible emission power and/or is deflected away from the object.

According to the camera monitoring (CMS) system of the invention, a scene in a field of view (FOV) is recorded and in case an object, in particular a living being or a person in the scene recorded is identified, an infrared light to light up the scene in the field of view (FOV) is controlled such the at least one predetermined permissible emission power is reduced and/or is deflected away from the object. Thus, it can be prevented that the object identified in the scene, in particular a living object or a person, is impaired by the Infrared light. Further, the emission power of the infrared light, e.g. a respective IR lamp, of the infrared lighting device may also be higher than an allowable emission power, e.g., when a person as identified object looks into the light cone of the respective IR lamp, since the camera monitoring (CMS) system may detect and localize such a person as an object and reduce the emission power thereupon to an allowable emission power and/or deflect it away from the object.

Further, a vehicle, in particular a truck, passenger car, van or bus, is provided with such a CMS system. According to an embodiment of the invention, the CMS system and the infrared lighting device are arranged on the vehicle in such a way that the field of view of an infrared sensitive camera , which can be illuminated by the infrared lighting device, comprises at least one longitudinal side of the vehicle, wherein the CMS system and the infrared lighting device are arranged independently of one another at different vehicle positions or are accommodated in a common housing, in particular a wing housing, and are arranged on the vehicle.

The CMS system can thereby function on the vehicle together with the infrared lighting device, for example, as a digital rearview mirror.

Also provided is a method for controlling such a CMS system, wherein the method comprising the steps of:
lighting up at least one field of view of at least one camera by means of infrared radiation of an infrared lighting device;
recording a scene in the field of view of the at least one camera;
identifying an object in images of the scene recorded by the at least one camera; and
reducing the infrared light illuminating the object to at least one predetermined permissible emission power and/or deflecting the infrared light illuminating the object away from the object.

In an embodiment of the invention, the camera monitoring system (CMS) further comprises a coupling device configured to be coupled to at least one further, in particular external, camera which is configured to record a further scene in a further field of view (FOV-2). The at least one camera and the at least one further camera are arranged such that their fields of view (FOV, FOV-2) are aligned on a common point or area of interest.

In another embodiment of the invention, the image processing device is configured to identify an object in the further scene, in particular for verification of an identification of an object.

In an embodiment, the image processing device may be configured to determine whether the identified object is present only in the first scene recorded by the first camera or only in the second scene recorded by the second camera, or in both scenes, and the camera monitoring system may be configured to control the infrared lighting device depending on whether the identified object is present only in one or both of the first and second scenes recorded by the first and second cameras, respectively.

According to a further embodiment, the image processing device may be configured to determine a select region of the identified object, and the camera monitoring system may be configured to control the infrared lighting device in such a way that the intensity of infrared light emitted by the infrared lighting device illuminating the select region is reduced.

According to an embodiment of the invention, the at least one further camera is configured to provide additional distance information for the identified object. The image processing device is configured to determine a distance of the identified object from the infrared lighting device based on the distance information. The control device is configured to provide information to an infrared lighting device in such a way that the intensity of infrared light emitted by the infrared lighting device illuminating the identified object is reduced if the determined distance is equal to or smaller than a predetermined distance.

In a further embodiment of the invention, the image processing device is configured to determine a select region of the identified object, in particular whether the identified object comprises a face and/or whether a direction of view of the object necessitates reduction or deflection of infrared light illuminating the object to avoid blinding of the object.

In another embodiment of the invention, the camera monitoring system (CMS) further comprising an infrared lighting device coupled to the control device and comprising at least one infrared, IR, lamp. The control device is configured to control the infrared lighting device in such a way that the intensity of infrared light is reduced to the predetermined intensity by the at least one IR lamp being switched off and/or, especially partly, dimmed down.

According to an embodiment of the invention, the infrared lighting device comprises at least one optical system associated with the at least one infrared lamp. The control device is configured to control the infrared lighting device in such a way that the intensity of infrared light emitted by the infrared lighting device illuminating the identified object is reduced by adjusting the at least one optical system.

In an embodiment of the invention, the optical system is configured to deflect infrared light away from an identified object and the control device is configured to control the infrared lighting device in such a way that the intensity is reduced by deflecting infrared light emitted by the at least one infrared lamp away from the identified object by means of the optical system.

In a further embodiment of the invention, the at least one camera comprises an image sensor having a plurality of pixel and the image processing device is configured to distinguish and process information provided by different pixel.

In another embodiment of the invention, the infrared lighting device comprises a plurality of IR lamps arranged in a matrix. Each IR lamp is associated with a pixel or a cluster of pixels of the image sensor. The image processing device is configured to determine in which pixel or cluster of pixel the identified object is located. The control device is configured to switch off and/or dim down the respective IR lamp associated with the pixel or the cluster of pixels in which the identified object is located.

According to an embodiment of the invention, the at least one camera is configured to provide distance information for each pixel of the image sensor. The image processing device is configured to determine a distance of the identified object from the infrared lighting device based on the distance information supplied for each pixel of the image sensor. The control device is configured to provide information to control the infrared lighting device in such a way that the intensity of infrared light illuminating the identified object is reduced if the determined distance is equal to or smaller than a predetermined distance.

The above embodiments and further embodiments can be combined with each other as desired, if useful. Further possible embodiments, further developments and implementations of the invention also comprise combinations of features of the invention described before or below with respect to the embodiments, which are not explicitly mentioned. In particular, those skilled in the art will thereby also add individual aspects as improvements or additions to the respective basic form of the present invention.

### DESCRIPTION OF THE DRAWINGS

The present invention is explained in more detail below with reference to the embodiments indicated in the schematic figures of the drawings. Thereby, it is shown:
- Fig. 1: a schematic sketch of an embodiment of a camera monitoring (CMS) system according to the present invention, which is coupled to an infrared lighting device;
- Fig. 2: a block diagram of an embodiment example of a method according to the invention;
- Fig. 3: a schematic view of a truck and when the truck is making a turn;
- Fig. 4: a side view showing the longitudinal side of a truck, wherein a circuit board with an IR lamp is attached to the driver's cabin, in this case A-pillar, and is inclined by a vertical angle about the vertical of the vehicle for lighting up the longitudinal side of the vehicle in the longitudinal direction of the vehicle;
- Fig. 5: a schematic view of a light cone of an IR lamp;
- Fig. 6: a schematic view in which the circuit board in Fig. 4 is a first circuit board inclined by a near vertical angle about the vertical of the vehicle for lighting up a near area of the vehicle longitudinal side in the vehicle longitudinal direction;
- Fig. 7: a schematic view in which the circuit board in Fig. 4 is a second circuit board inclined by a far vertical angle about the vertical of the vehicle for lighting up a far area of the vehicle longitudinal side in the vehicle longitudinal direction;
- Fig. 8: a top view of the truck of Fig. 4, wherein the circuit board in Fig. 4 is shown inclined by a horizontal angle, and wherein the course of the light cone for the first and second circuit boards with their respective first and second IR lamps is shown;
- Fig. 9: a perspective view of a first and second printed circuit board of the infrared lighting device according to the invention, each having, for example, five first IR lamps and five second IR lamps;
- Fig. 10: a further perspective view of the first and second circuit boards according to Fig. 9;
- Fig. 11: a side section view of the first and second circuit boards according to Figs. 9 and 10;
- Fig. 12: a perspective view of a bracket with the first and second circuit boards of the infrared lighting device attached thereto according to Figs. 9-11;
- Fig. 13: a bottom view of the bracket with the two circuit boards with the lighting start point as shown in Fig. 12;
- Fig. 14: a perspective view of the holder according to Figs. 12 and 13; and
- Fig. 15: a perspective view of a housing, in particular a wing housing, in which the holder and the infrared lighting device according to Figs. 12-14 are accommodated.

### DESCRIPTION OF EMBODIMENTS

The following description is merely exemplary and is not intended to limit the present disclosure, application or use. It is understood that in the drawings the corresponding parts and features are indicated by corresponding reference signs.

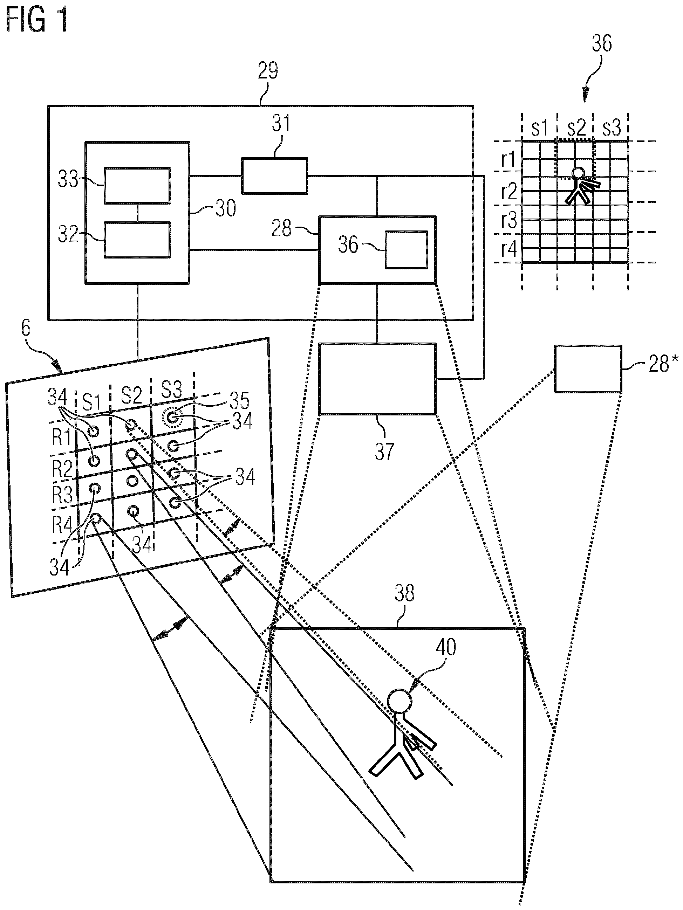

According to the invention a camera monitoring (CMS) system 29 is provided which comprises at least one camera 28 configured to record a scene in a field of view (FOV) of the at least one camera 28. Further embodiments of the camera monitoring (CMS) system 29 and its at least one camera 28 will be described in the following with respect to Figs. 1 to 15.

The camera monitoring (CMS) system 29 further comprises an image processing device configured to identify an object, in particular a living being or a person, in the scene recorded by the at least one camera. Further the camera monitoring (CMS) system 29 comprises a control device configured to provide information to be used for control of an infrared lighting device configured to emit infrared light to light up the scene in the field of view (FOV) of the at least one camera 28 in such a way that infrared light illuminating an object upon identification of the object is reduced to at least one predetermined permissible emission power and/or is deflected away from the object.

Moreover, in an embodiment of the invention, the camera monitoring (CMS) system 29 further comprises a coupling device configured to be coupled to at least one further, in particular external, camera 28* which is configured to record a further scene in a further field of view (FOV-2). The at least one camera 28 and the at least one further camera 28* are arranged such that their fields of view (FOV, FOV-2) are aligned on a common point or area of interest as shown for example in the embodiment in Fig. 1.At least one of the cameras 28 camera 28* can be for example an infrared sensitive camera or a daylight camera.

The processing device is configured to identify an object in the further scene recorded by the further camera 28*, in particular for verification of an identification of an object.

The at least one further camera 28* is for example further configured to provide additional distance information for the identified object. The image processing device is preferably further configured to determine a distance of the identified object from the infrared lighting device 6 based on the distance information. The control device is also preferably further configured to provide information to the infrared lighting device in such a way that the intensity of infrared light emitted by the infrared lighting device illuminating the identified object is reduced if the determined distance is equal to or smaller than a predetermined distance.

The image processing device is further preferably configured to determine a select region of the identified object, in particular whether the identified object comprises a face and/or whether a direction of view of the object necessitates reduction or deflection of infrared light illuminating the object to avoid blinding of the object.

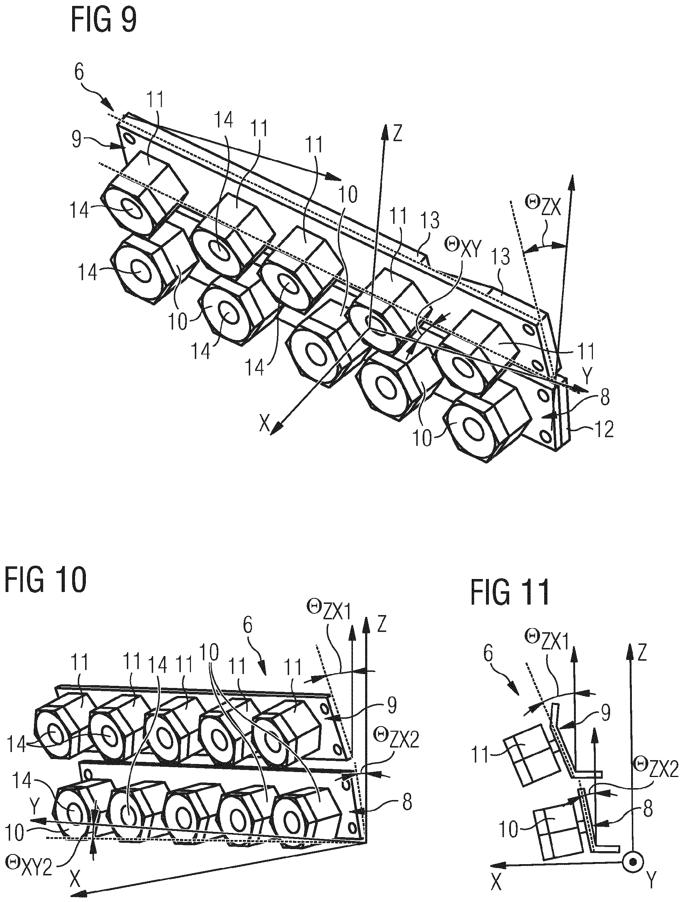

In an embodiment of the invention, the camera monitoring system (CMS) 29 can further comprise an infrared lighting device coupled to the control device and comprising at least one infrared,IR, lamp. The control device is configured to control the infrared lighting device in such a way that the intensity of infrared light is reduced to the predetermined intensity by the at least one IR lamp being switched off and/or, especially partly, dimmed down. An example is also described, e.g., with respect to Figs. 9-15.

The infrared lighting device comprises in an embodiment preferably at least one optical system associated with the at least one infrared lamp ,wherein the control device is configured to control the infrared lighting device in such a way that the intensity of infrared light emitted by the infrared lighting device illuminating the identified object is reduced by adjusting the at least one optical system. An optical element 35 suitable for an optical system is illustrated, e.g., in Fig. 1.

The optical system is configured to deflect infrared light away from an identified object and the control device is configured to control the infrared lighting device in such a way that the intensity is reduced by deflecting infrared light emitted by the at least one infrared lamp away from the identified object by means of the optical system.

In a further embodiment of the invention, the at least one camera 28, and preferably also the camera 28*, comprises an image sensor having a plurality of pixel and the image processing device is configured to distinguish and process information provided by different pixel.

The infrared lighting device 6 comprises a plurality of IR lamps 34, 10, 11 arranged in a matrix as shown in Fig. 1 and will be described with respect to the embodiment illustrated in Fig. 1 below.

Each IR lamp 34, 10, 11 is associated with a pixel or a cluster of pixels of the image sensor 36 of the camera 28 and/or camera 28*. The image processing device is configured to determine in which pixel or cluster of pixel the identified object is located. The control device is configured to switch off and/or dim down the respective IR lamp associated with the pixel or the cluster of pixels in which the identified object is located.

The at least one camera 28 is configured to provide distance information for each pixel of the image sensor. In case the camera 28* is provided, said camera 28* can be also configured to provide distance information for each pixel of its image sensor. The image processing device is configured to determine a distance of the identified object from the infrared lighting device based on the distance information supplied for each pixel of the image sensor of the camera 28 and/or the image sensor of camera 28*. The control device is configured to provide information to control the infrared lighting device in such a way that the intensity of infrared light illuminating the identified object is reduced if the determined distance is equal to or smaller than a predetermined distance.

In Fig. 1, a schematic sketch of an embodiment of a camera monitoring system according to the invention (Camera Monitoring System, abbreviated CMS) 29, abbreviated CMS system 29, is shown. The schematic sketch is purely schematic and highly simplified. The camera monitoring (CMS) system 29 according to the invention comprises a control device 30, an image processing device 31 and at least one camera, e.g., an infrared sensitive camera 28, wherein the infrared sensitive camera 28 is designed to provide distance information for each pixel, more precisely for each pixel of its image sensor 36. As mentioned before, in an embodiment of the invention, the camera monitoring (CMS) system 29 can further comprises a coupling device configured to be coupled to at least one further, in particular external, camera 28* which is configured to record a further scene in a further field of view (FOV-2). The at least one camera 28 and the at least one further camera 28* are arranged such that their fields of view (FOV, FOV-2) are aligned on a common point or area of interest as shown in the embodiment in Fig. 1. At least one of the cameras 28 camera 28* can be for example an infrared sensitive camera or a daylight camera.

Furthermore, the camera monitoring (CMS) system 29 according to the invention comprises a memory 32 and its computing device 30 further comprises a computing and regulating device 33.

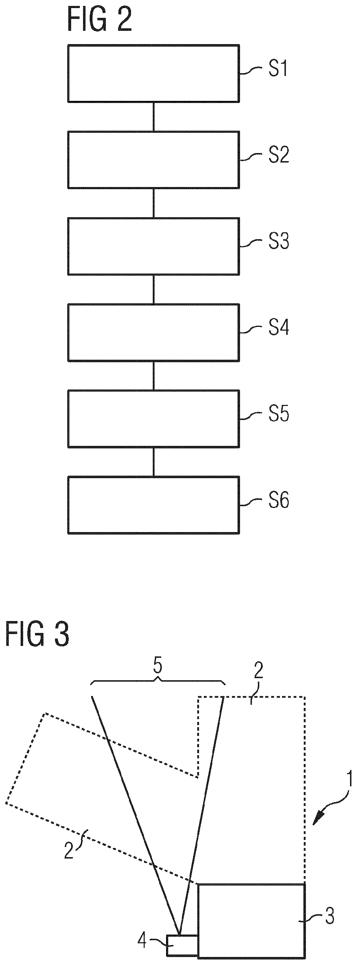

Furthermore, in the embodiment, the camera monitoring (CMS) system 29 according to the invention is coupled to an infrared lighting device 6 and may be configured to be attachable thereto to a vehicle, e.g., car, truck, bus, transport, etc., as shown in the embodiment in Figs. 3-15 below.

The infrared lighting device 6 thereby comprises at least one infrared (IR) lamp 34 or, as shown in the example in Fig. 1, a plurality of IR lamps 34.

The plurality of IR lamps 34 are thereby arranged, for example, in a 2D array or matrix, as indicated in the example shown in Fig. 1. The number of rows R1, R2, R3 and columns S1, S2,S3 of the matrix with the IR lamps 34 arranged in each field R1,S1; R2,S1...;R3,S1...R3, S3 of the matrix is thereby merely exemplary and can be adapted as desired, in particular expanded or reduced to a single field with one IR lamp, depending on the function and intended use. Furthermore, at least one, several or all IR lamps 34 can be coupled with an additional optical system which comprises at least one optical element 35, as is indicated in a highly simplified manner with a dotted line as an example for one of the IR lamps 34 of the matrix in Fig. 1. The light cones of the IR lamps 34 each comprise a beam angle β, which will be explained in more detail below with reference to Figs. 3-15. The emission power and/or the beam angle of the IR LEDs 34 may be the same or different for at least two IR LEDs 34.

The at least one optical element 35 is, for example, a lens, a filter, an adaptive optic, e.g., a deformable mirror, an active optical element, in particular an optical modulator, e.g., an acoustooptic modulator or an electro-optic modulator, and/or a mirror. The respective optical element 35 may optionally additionally be coupled to at least one actuator, guide and/or wheel, e.g. filter wheel, for exchanging, adjusting and/or moving the optical element. For example, by means of the actuator, the infrared light of the IR lamp 34 of the infrared lighting device 6 can be redirected by the at least one optical element 35, if necessary, in such a way that the infrared light is directed, in particular, away from a person and the head region thereof, in order to prevent blinding of the person's eyes. For example, in such a case, the infrared light of the IR lamp can be directed specifically to the floor or any other non-critical area in which no pairs of eyes of persons can be blinded. The respective IR lamp 34 of the infrared lighting device 6 does not emit visible light but exclusively light in the infrared range, in particular in the near-infrared range (abbreviated NIR range). The near-infrared range thereby extends in a wavelength range between 780nm to 1400nm and in particular between 700nm and 1000nm.

An IR light emitting diode, i.e., IR LED (Light Emitting Diode abbreviated LED), is preferably used as the respective IR lamp 34. However, any other suitable IR lamp 34 may be used instead of the IR LED described below as an example of an IR lamp, depending on the function and intended use. This applies to all embodiments of the invention as described with reference to Figs. 1-15. For example, but not limited thereto, IR LEDs 34 are manufactured with a wavelength of, for example, 840nm, 850nm, 875nm, 880nm, 885nm, 890nm, 940nm and 950nm. Unlike normal LEDs, the emission power is not expressed in candela (Cd), since it is not visible light, but in milliwatts (mW), although there are IR LEDs with power values of several hundred milliwatts.

At least one, several or all IR lamps 34, in particular IR LEDs, can optionally be additionally configured to be dimmable. In this way, the emission power of the respective IR LED can be changed as required, in particular increased or dimmed up or decreased or dimmed down.

The CMS system 29 comprises the at least one camera 28, e.g. an infrared sensitive camera 28, with the image sensor 36, wherein the camera 28 is designed to provide distance information for each pixel, in particular for each pixel of its image sensor 36.

Further, the CMS system 29 comprises the image processing device 31 for processing the image data detected by the camera 28 and preferably distance information for each pixel. The image processing device 31 of the camera 28 comprises at least one object recognition algorithm and/or is coupled to an object recognition device 37 comprising at least one object recognition algorithm.

The respective object recognition algorithm of the image processing device 31 is configured to locate and determine an object, for example a person and/or a head region of a person in images 38 captured by the camera 28.

The respective at least one object recognition algorithm of the object recognition device 37 is configured such that the image processing device 31 can locate and determine, an object, for example a person and/or a head region of a person in images 38 captured by the camera 28 based on this object recognition algorithm. The CMS system 29 with its image processing device 31 can make use of such an object recognition algorithm of the object recognition device 37, in particular, if the image processing device 31 itself does not have such an object recognition algorithm. For this purpose, the CMS system 29 is coupled or coupable to the external object recognition device 37 so as to be able to fall back on its at least one object recognition algorithm as well as optionally additional data, in particular image data and/or distance information, etc. As described below, such an external object recognition device 37 is, for example, a TOF camera, a LIDAR camera, or an imaging radar system.

The camera 28, e.g., an infrared sensitive camera 28, may also be provided as a TOF camera, a LIDAR camera, or an imaging radar system, or may use the principle of the TOF camera, the LIDAR camera, or the imaging radar system, respectively, to measure distance. The invention is not limited to these examples of imaging depth cameras nor to their measurement principle using lasers or radio waves nor to infrared sensitive cameras as at least one camera of the CMS system 29.

The image data processed by means of the image processing device 31 can be displayed on a display device 39, in particular a monitor or display. The display device 39 can be part of the CMS system 29, as indicated in Fig. 1, or can be coupled to the CMS system 29 as an external display device, for example a display device which is mounted next to the CMS system 29 in or on the outside of the vehicle, here e.g. truck, car or bus etc..

In case of an nfrared sensitive camera 28 as at least one camera of the CMS-System 29, in this context, can be any camera that is capable of picking up infrared light and generating a corresponding infrared image therefrom. Such an infrared sensitive camera 28, e.g. an RGB camera, normally comprises a lens configured to focus light onto an image sensor 36 as an image capturing unit of the camera. In the case where the infrared sensitive camera 28 can receive and process visible light in addition to infrared light, an infrared (IR) filter is provided, for example. This is arranged in daylight to receive visible light in an optical path provided between the lens and the image capture unit and its image sensor 36, for example by means of a filter switch. If infrared light is to be received and processed by the image capture unit image sensor 36 to produce corresponding infrared images, for example when there is insufficient daylight or at night, the infrared (IR) filter is removed from the optical path between the lens and the image capture unit and its image sensor 36.

Other infrared sensitive cameras 28 that can receive both infrared light and daylight include RGB (red, green, blue, abbreviated RGB) cameras, RGB-IR cameras. An RGB-IR camera uses a new type of color filter array (CFA) as an image sensor with dedicated pixels for both visible and IR light.

This allows images to be captured in both the visible and IR spectrums without the need for a mechanical filter switch. An RGB-IR camera has an additional set of pixels that only transmit light in the IR spectrum. The presence of these pixels facilitates imaging in multiple bands. Many sensor manufacturers have developed this new CFA, which has a combination of R, G, B, and IR pixels.

Further, in an embodiment of the invention, the CMS system 29 is configured with the lightning start point, e.g. an Infrared lighting start point, for lighting up the field of view of the camera 28, e.g. the Infrared sensitive camera 28 or is coupled with an external Infrared lighting device 6.

The CMS system 29 further comprises the control device 30 configured to receive, for example, the electrical signals from the camera 28, e.g. the infrared sensitive camera 28, the infrared sensitive lighting device 6, and, if provided, the object recognition device 37, and to generate and send control commands to, for example, the camera 28, e.g., the infrared sensitive camera 28, the infrared sensitive lighting device 6 and its lighting controller for controlling the IR LED 34, and, if provided, the object recognition device 37.

As previously described, the image processing device 31 of the camera 28, e.g. the infrared sensitive camera 28, comprises at least one object recognition algorithm and/or is coupled to an object recognition device 37 that comprises at least one object recognition algorithm that can be accessed by the image processing device 31. By means of the at least one object recognition algorithm, the image processing device 31 can localize and determine a respective object in the images detected by the camera 28, e.g., the infrared sensitive camera 28. The localized and determined object may be, for example, a person or an object such as a tree, a sign, an animal, etc.

In the example shown in Fig. 1, the camera 28, e.g., infrared sensitive camera 28, has captured an image 38 with an object 40 and, using the at least one object recognition algorithm, the image processing device 31 can determine that the localized object 40 is a person or living object. Optionally additionally, the image processing device 31 may further locate and determine the head region of the person or the living object.

By means of the at least one object recognition algorithm and at least the distance information to each pixel of its image sensor 36, and optionally additional distance information to each pixel of the image sensor of the object recognition device 37, the image processing device 31 can determine the distance of the localized object 40 to the infrared lighting device 6 and preferably each of its IR LEDs 34, and in particular the distance of a localized person and preferably a localized head area to the infrared lighting device 6 and preferably each of its IR LEDs 34.

As an external object recognition device 37, the CMS system 29 may, for example, be coupled to at least one camera system for spatial, three-dimensional recognition, for example a TOF (time of flight, abbreviated TOF) camera, a LIDAR (Light Detection And Ranging, abbreviated LIDAR) camera, or an imaging radar system, and so forth. However, the invention is not limited to the above examples of cameras and camera systems.

Such an imaging radar system is a type of radar that can be used for imaging. Typical radar technology involves emitting radio waves, receiving their reflection, and using this information to generate data. In an imaging radar system, the returning waves are used to create an image. When the radio waves reflect off objects, this causes changes in the radio waves and can provide data about localized objects, such as how far the waves have traveled and what type of localized object they have encountered. Using the detected data, an evaluation device of the imaging radar system can then create a 3D or 2D image of the localized object as a target.

TOF cameras are camera systems that measure distances using the time-of-flight (TOF) method. They are also called PMD cameras after the PMD (Photonic Mixing Device, abbreviated PDM) sensor used as the image sensor. To do this, the environment or the camera's field of view is illuminated by means of a light pulse, and the TOF camera measures the time it takes for the light to reach the object and return for each pixel. The time required is directly proportional to the distance. Thus, for each pixel, the TOF camera provides the distance of the object imaged on it. By emitting light and measuring the time of flight of the reflection, the distance of individual pixels to the camera system can be determined.

However, it is also possible to use other camera systems for the object recognition device 37 as well as for the camera, e.g. infrared sensitive camera 28, for spatial, three-dimensional recognition, such as stereo cameras, triangulation systems, light field cameras, interferometry systems or scanner systems, in particular a stripe light scanner. The common feature of all camera systems used here is the localizing of an object, the determination of the localized object as a person or object and the determination of the distance in particular of the person as localized object from the camera system. The distance of the person as localized object from the camera system can be used to determine the distance of the person to the infrared lighting device 6 and preferably each of its IR LEDs 34 subsequently and derived therefrom.

The LIDAR camera with corresponding image sensor is based on the LIDAR (from Light Detection And Ranging) measurement principle and more precisely on the determination of the duration between the emission of a laser pulse and the reception of the reflected light. Since the speed of light is known, the distance to the reflecting object can be determined directly from this duration. In LIDAR cameras, a three-dimensional image of the environment is provided from many of these measurements. Both scanning methods, which detect the surroundings point by point or line by line, and so-called Flash LIDAR, which light up the surroundings with a single laser pulse, are possible. LIDAR cameras use, for example, CCD image sensors (Charge-Coupled Devices, abbreviated CCD) or CMOS image sensors (Complementary MetalOxide Semiconductor, abbreviated CMOS), etc., although the invention is not limited to the examples mentioned.

At night, or when lighting conditions are so low that visible light is insufficient to capture images using a conventional daylight camera, the CMS system 29 controls the infrared lighting device 6. The CMS system 29 controls the infrared lighting device 6 and its lighting start point such that the field of view of the camera, e.g. an infrared sensitive camera 28, is lit up with infrared light by the respective IR LED 34. Further, the CMS system 29 controls the camera 28, e.g., an infrared sensitive camera 28, such to take images, e.g., infrared images, and process them in the image processing device 31 to display the processed images, e.g., infrared images, on the display device 39 coupled to the CMS system 29, in particular to a driver of the vehicle on which the CMS system 29 is provided.

Furthermore, in a further step, the CMS system 29 controls the image processing device 31 in such a way to localize objects 40 present in the field of view of the camera 28, e.g., infrared sensitive camera 28, by means of the at least one object recognition algorithm of its own and/or the at least one object recognition algorithm of the object recognition device 37 coupled to the CMS system 29 and to determine the localized objects 40, in particular persons and living objects, as well as to determine the distance of the respective localized object to the infrared lighting device 6 and preferably each individual IR LED 34 thereof.

Depending on the distance of the object localized as a person, and preferably depending on the localized head area of the person from the respective IR LED 34 of the infrared lighting device 6, the infrared lighting device 6 is controlled by the CMS system 29 and its control device 30 in such a manner that the person is not blinded by the respective IR LED 34 of the infrared lighting device 6 if the distance between the person and in particular his head area has reached or fallen below a predetermined eye safety distance for infrared light for the respective IR LED 34, for example. In this case, the respective IR LED 34 whose eye safety distance has been reached or fallen below by the localized person or by his localized head area is switched off or dimmed down to an emission power that is not dangerous for eyes. In the memory 32 of the CMS system 29, an eye safety distance for the respective IR lamp 34 of the infrared lighting device 6 is stored so as to be retrievable by the control device 30. Additionally, for dimmable IR lamps, an allowable emission power may also be stored in the memory 32 in a retrievable manner by the control and regulating device 32.

The control device 30 comprises the computing and regulating device 33, which is configured to determine and compare, for example, at time intervals or continuously, the distance between a respective IR lamp 34 of the infrared lighting device 6 and the localizing object 40. The computing and controlling device 33 can thereby determine whether this distance is greater than, equal to or smaller than the assigned eye safety distance of the respective IR lamp 34 and, for example, additionally whether this distance increases, remains the same or becomes smaller over the course. The control device 30 can control the emission power of the respective IR lamps 34 of the infrared lighting device 6 depending on the course of the distance between the respective IR lamp 34 of the infrared lighting device 6 and the localized object 40. The control device 30 can control the infrared lighting device 6 in such a way depending on the course of the distance between the respective IR lamp 34 of the infrared lighting device 6 and the localized object 40 to increase, maintain or reduce the emission power of the infrared lighting device 6, in particular to increase or reduce it stepwise.

The switching off and/or dimming down of IR LEDs 34 of the infrared lighting device 6 can thus already take place during a shortening of the distance between the localized person or his localized head area and the respective IR LEDs 34, for example when the localized person moves in the direction of the infrared lighting device 6. Instead of switching off all required IR LEDs 34 at once or dimming them down to a non-hazardous emission power at once, as soon as their respective eye safety distance from the localized person and in particular their localized head area has been reached, these IR LEDs 34 can also be switched off or dimmed down stepwise beforehand, while the distance between the IR LEDs 34 and the localized person or their localized head area is shortened, until in the end all IR LEDs 34 concerned are switched off or dimmed down when their eye safety distance has been reached. This has the advantage that the representation of the respective infrared images of the infrared sensitive camera 28 displayed by the display device 39 does not change abruptly as soon as a localized person and in particular his localized head area has reached an eye safety distance from the respective IR LEDs 34 of the infrared lighting device 6. Instead, the display of the respective images, e.g. infrared images, of the camera 28, e.g., infrared sensitive camera 28, displayed by the display device 39 changes gradually.

Conversely, the respective affected IR LEDs 34 of the infrared lighting device 6 that have been switched off or dimmed down can also be switched on again in steps instead of all at once or, for example, dimmed up to an initial value as soon as the localized person and, in particular, his localized head area has again exceeded the eye safety distance from these affected IR LEDs 34 because the localized person moves away from the infrared lighting device 6 again.

The higher the emission power of the IR lamp 34, in particular IR LED, the larger an associated eye safety distance must be in order to sufficiently protect the eyes of a person as a localized object looking into the light cone of the respective IR lamp 34 of the infrared lighting device 6. As previously described, in contrast to normal LEDs, the emission power of IR LEDs 34 as IR lamps is not expressed in candela (Cd), since it is not visible light, but in milliwatts (mW).

Such an eye safety distance is necessary because IR radiation can damage the eyes if a person stands too close to the IR lamp 34 and looks into its light cone. IR rays are not visible to the human eye and can therefore cause damage to the eyes if the distance between the eyes and the IR lamp 34 is less than the eye safety distance specified for this purpose. The eye safety distance between an IR lamp 34 and a pair of eyes depends on the emission power of the IR lamp 34. The higher the emission power of the IR lamp 34, in particular IR LED, the greater the required eye safety distance, i.e. the distance between IR lamp 34 and a pair of eyes. An eye safety distance for the respective IR lamp 34, for example, can be stored in the memory 32 of the CMS system 29 in a retrievable manner.

Thus, if an object 40 is localized by the image processing device 31 and the localized object 40 is determined to be a person or living being, the infrared lighting device 6 is controlled depending on the distance of the person to the infrared lighting device 6 and in particular its individual IR lamps 34, in particular controlled such that the person is not blinded by the IR lamps 34 and in particular individual IR lamps 34 of the infrared lighting device 6.

For example, each IR lamp 34, in particular IR LED, of the infrared lighting device 6 is assigned at least one pixel or at least one group or cluster of pixels or pixels of the image sensor 36 of the camera 28, e.g. infrared sensitive camera 28, as indicated by way of example and in a highly simplified manner in Fig. 1. In this context, moreover, each image point or pixel or each group or cluster of image points or pixels may also be assigned a plurality of IR lamps 34, in particular IR LEDs, instead of one, since the light cones of adjacent IR lamps 34 may overlap, for example.

In the example shown in Fig. 1, the infrared lighting device 6 comprises twelve IR LEDs 34 arranged in a matrix with twelve fields. In the example shown in Fig. 1, the twelve fields each having an IR lamp 34 are divided into, for example, four rows R1-R4 and three columns S1-S3. This illumination matrix with its twelve IR LEDs is assigned twelve groups orclusters of four pixels each of the image sensor 36 of the camera 28, e.g., infrared sensitive camera 28. The image sensor 36 thereby comprises, for example, correspondingly four rows r1-r4 and three columns s1-s3, each with a cluster of, for example, four pixels. In the affected clusters r1,s2 ; r2,s2 and r2,s3 of the image sensor 36, a person has been located and determined as an object 40 by means of the image processing device 31, and the head area of the person has been located and determined in the affected cluster r1,s2.

Thus, when a field of view of the camera 28, e.g., infrared sensitive camera 28, of the CMS system 29 is lit up with infrared light by the infrared lighting device 6, the CMS system 29 controls the lighting device and its lighting start point by means of its control device 30 in such a manner as to turn off affected IR LEDs 34, in order to suitably reduce the emission power of the infrared lighting device 6 and/or to suitably reduce the emission power at affected additionally dimmable configured IR LEDs 34 (if any), so that a person, who has been localized and determined as an object 40, is not blinded by the infrared light of the infrared lighting device 6 when he has reached or exceeded the eye safety distance.

At least depending on the distance of the person as localized object 40 or preferably the distance of his head area from the respective IR lamp 34 of the infrared lighting device 6, the IR LED concerned is switched off or dimmed to an emission power permissible for the distance, if the respective IR LED 34 concerned is configured to be dimmable.

In addition to the distance of the person as localized object 40 or preferably the distance of his head area from the respective IR LED 34 of the infrared lighting device 6, the respective IR LED 34 is switched off or dimmed depending on at least one further parameter if the respective IR LED is configured to be dimmable. The at least one further parameter is, for example, the matrix position, e.g. R1, S2 of the IR LED 34 or the cluster of pixels of the image sensor that is assigned to the IR LED, e.g. r1, s2. Depending on whether a person has been located and determined as a localized object 40 or preferably a head region of this person in the cluster associated with the respective IR LED 34, e.g. r1, s2, or matrix position associated with the respective IR LED 34, e.g. R1, S2, at least this concerned respective IR LED 34 of the infrared lighting device 6 is controlled via its lighting start point by the CMS system 29 by means of its control device 30. For example, the respective affected IR LED 34 is switched off or dimmed down to an emission power permissible for the distance of the person or his head area to the IR LED 34 when the distance of the respective affected IR LED 34 from the person or his head area has reached or fallen below, for example, an assigned eye safety distance. Additionally or alternatively, the respective affected IR LED 34, if it comprises an additional optical system as previously described, may also be suitably adapted by its associated optical system to prevent glare from the localized object 40, in particular a person or their head area. For this purpose, the infrared light of the IR LED 40 can be directed by the associated optical system, for example, away from the localized object 40, in particular a localized person or their localized head area, in particular into a non-critical area, e.g. the ground.

Fig. 2 shows a block diagram of an embodiment of a method according to the invention for controlling a CMS system. The method comprises the steps: Lighting up a field of view of the infrared sensitive camera with the respective IR lamp of the infrared lighting device in a step S1. Detecting a respective image by the camera, e.g. an infrared sensitive camera, and a distance information to each pixel of the image in a step S2. Localizing an object and determining the localized object as a person, a living being, a head portion of a living being or a head portion of a person by at least one object recognition algorithm in a step S3. Determining a distance of the person or head area of a person as a localized object from the respective IR lamp of the infrared lighting device in a step S4. Comparing the distance of the localized object from the respective IR lamp with an associated eye safety distance for that IR lamp in a step S5, and reducing the emission power of the IR lamp if its distance is equal to or smaller than the eye safety distance in a step S6.

The infrared lighting device 6 as previously described with reference to Figs. 1 and 2 may be provided attachable to a vehicle together with the CMS system 29 in such a manner as to light up a viewing area of the camera 28, in particular an infrared sensitive camera 28, along a longitudinal side of the vehicle when necessary, particularly in darkness, at night, or when the vehicle is in shadow.

In Fig. 3, an embodiment infrared lighting device 6 is shown which is configured to be attachable to a vehicle, e.g., car, truck, bus, transport, etc., and is coupled to CMS system 29 as previously described with reference to Figs. 1 and 2. The infrared lighting device 6 thereby comprises at least one infrared (IR) lamp or, as shown in the example in Fig. 1, a plurality of IR lamps 11, 12.

In Fig. 3, the vehicle 1 shown is, for example, a truck, and the movement of the trailer 2 of the truck is additionally illustrated during cornering. In Fig. 3, only a single infrared (IR) lamp together with at least one camera, e.g., an infrared sensitive camera, is attached to the driver's cabin 3 of the truck in a housing 4, in this case a wing housing. In this case, the wing housing 4 is attached to the A-pillar of the driver's cabin. However, with a single infrared light source, the vehicle 1, here the truck, cannot be sufficiently uniformly illuminated up to its longitudinal end, as shown by the light cone. Thus, the illumination of the truck on its side along the length of the vehicle decreases more and more toward the end, so that the visual image detected by the camera, e.g. an infrared sensitive camera, becomes darker and darker in the rear area of the truck.

Taking into account the requirements for eye safety, it is not possible to use such a powerful IR lamp that sufficiently lights up the entire range of motion of an elongated vehicle, such as the truck in Fig. 3, so that the at least one camera, e.g., infrared sensitive camera can detect a visible image of the vehicle that is as uniformly illuminated as possible for the driver without any dark areas.

In this case, a correspondingly powerful IR lamp with a very high emission power would have to be used to light up the vehicle 1 up to its longitudinal end and, for example, additionally its movement area. However, the higher the emission power measured in milliwatts of the IR lamp, the greater an associated eye safety distance must be to sufficiently protect the eyes of a person looking into the light cone of the IR lamp.

In order to achieve sufficient and as uniform as possible illumination of a vehicle, in particular its longitudinal side, over a predetermined vehicle length as the area to be illuminated, an infrared lighting device according to the invention is therefore provided, as previously described with reference to Figs. 1 and 2.

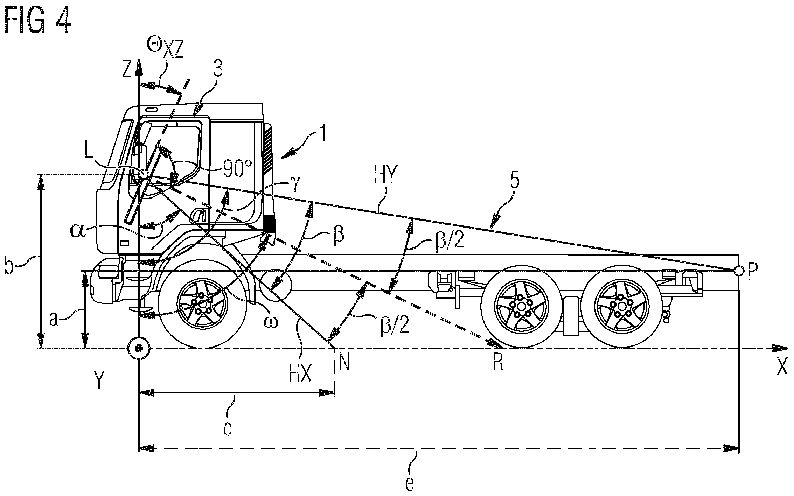

In this context, the infrared lighting device according to the invention provides, instead of a single particularly powerful IR lamp for lighting up the vehicle 1 to its longitudinal end, a plurality of IR lamps, in particular IR LEDs. The IR lamps of the lighting device according to the invention are thereby further subdivided into at least one first IR lamp for a first partial area, here the near area, and at least one second IR lamp for a second partial area, here the far area, as will be explained in more detail below with reference to Figs. 4 to 8. The predetermined area of the vehicle 1 to be lit up, here the longitudinal side of the vehicle, is composed of the first and second partial areas. In principle, the predetermined area to be lit up can also be divided into more than two partial areas.

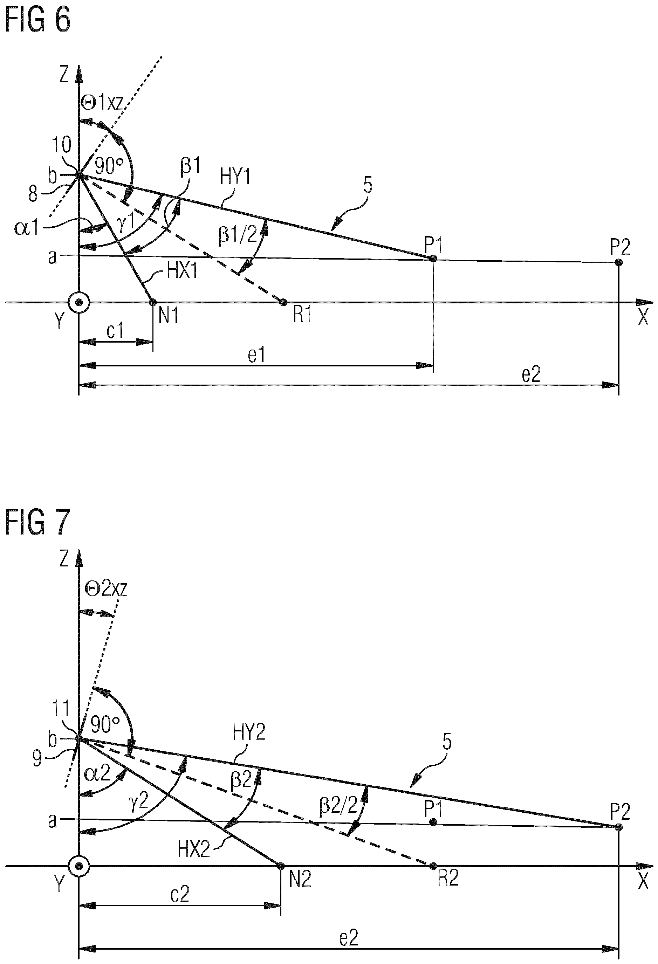

The at least one first IR lamp for the first partial area is arranged in such a way that it lights up a predetermined near area of the vehicle 1, in this case the longitudinal side of the vehicle, along the length of the vehicle, for example the area from the driver's cabin to the center of the vehicle in the longitudinal direction of the vehicle, as shown in Fig. 6 below.

The at least one second IR lamp for the far area is again arranged to light up a predetermined far area of the vehicle, in this case the longitudinal side of the vehicle, along its length, for example the area from the center of the vehicle to the end of the vehicle in the longitudinal direction of the vehicle, as shown in Fig. 7.

IR lamps are preferably used as the respective first and second IR lamps, as described below with reference to Figs. 4-15. However, any other suitable IR light source can also be used for the respective first and/or second IR lamp, depending on the function and intended use. In this way, the predetermined length, e.g. from the driver's cabin to the longitudinal end of the truck or beyond, can be sufficiently uniformly lit up over the entire predetermined length or the entire predetermined area by the at least one first and at least one second IR lamp of the infrared lighting device according to the invention, without sections with different light intensities or dark areas.

In Fig. 4, a side view of a vehicle 1 is shown, using a truck as an example, which is provided with an infrared lighting device according to the invention. However, the invention is not limited to such a truck, but any other vehicle, in particular elongated vehicles, can be provided with the infrared lighting device, e.g. buses, vans, passenger cars, etc..

For better understanding, the vehicle 1 and its infrared lighting device are shown in an X, Y, Z coordinate system. The X-axis runs along the length of the vehicle in the longitudinal or horizontal direction, the Y-axis runs along the width of the vehicle or in the transverse direction, and the Z-axis runs along the height of the vehicle in the vertical direction. The ground or the plane on which the vehicle is standing is spanned by the X-axis and Y-axis. The X, Y plane forms a horizontal plane and the X, Z plane forms a vertical plane.

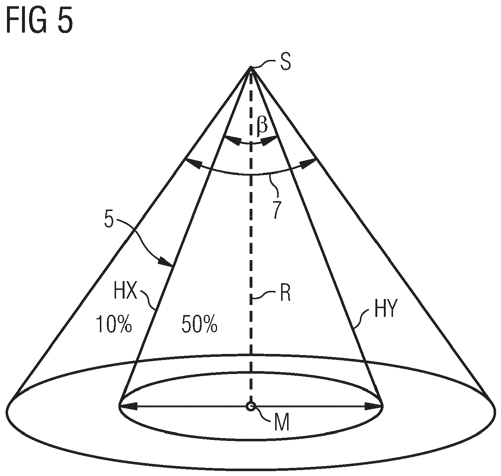

In the example shown in Fig. 4, a printed circuit board with an IR LED L is shown to explain the principle of the lighting device according to the invention. Here, the IR LED L is attached to the printed circuit board with its cone axis R perpendicular. The cone axis R runs through the tip Sand the center M of the base surface of the light cone, as explained in the following Fig. 5. Accordingly, the cone axis R of the light cone forms a 90° angle with the printed circuit board, as shown in Fig. 4 and following Fig. 5. The light cone of the IR LED comprises a beam angle β. The light cone is limited by its mantle with the two mantle lines HX and HY in Figs. 4 and 5.

As shown in Fig. 4, the first mantle line forms a start mantle line HX where the lighting up by the light cone 5 starts, and the second mantle line HY forms the end mantle line HY of the light cone 5 where the lighting up by the light cone 5 ends. The area between the two mantle lines is the area lit up by the light cone 5 of the IR LED in Figs. 4 and 5.

The angle α, i.e., the lighting start angle α, is the angle at which the illumination by the light cone 5 of the IR LED L starts up. Here, the angle α is the angle between the Z-axis (vertical) and the first mantle line HX, i.e. start mantle line. The angle γ, i.e. lighting end angle γ, is the angle at which the lighting of the light cone of the IR LED ends. The angle γ is the angle between the Z-axis (vertical) and the second mantle line HY, i.e. end mantle line, of the light cone 5. The cone axis angle ω is the angle between the Z-axis (vertical) and the cone axis R. The beam angle β of the IR LED is explained in more detail below with reference to Fig. 5.

For example, in the example shown in Fig. 4, the IR LED is attached to the truck at a height Z = b, where X = 0 and Y = 0. Depending on how much the printed circuit board with the IR LED L is inclined relative to the vertical Z axis in the X,Z plane by a vertical angle OXZ, the IR LED L and more precisely its light cone 5 can light up a certain area, in particular a near area or far area, of the truck in the longitudinal direction and thus along the X axis (longitudinal axis or horizontal axis).

The vertical angle OXZ can be determined, for example, depending on a desired lighting start point N on the start mantle line HX or a desired lighting end point P on the end mantle line HY of the light cone 5, in order to provide a desired lighting area of the light cone 5 with its beam angle β.

In this way, the desired illumination area of the light cone 5 with the beam angle β can be set. For this purpose, a point on the ground, for example, is set as the lighting start point N. In the example in Fig. 1, the point N comprises, for example, the distance XN = b and thus the distance from the IR LED, the height ZN = 0 and YN = 0. The corresponding vertical angle OXZ, by which the printed circuit board with the IR LED must be tilted so that the lighting start point N lies on the light cone and more precisely its start mantle line HX, can be easily calculated mathematically.

The desired lighting range of the light cone 5 with the beam angle β can also be set by selecting as the lighting start point P, for example, a point P at the end of the vehicle at vehicle height, as shown in Fig. 4. In this case, the lighting start point P comprises the predetermined distance XP = e, the predetermined height ZP = a = 1m and YP = 0. Thus, for example, the end of the vehicle can be lit up and also a person standing at the end of the vehicle at the point P can be illuminated.

The light cone of the IR LED in Fig. 4 and the following Fig. 5 extends between the two mantle lines HX and HY on which the desired lighting start point N and the lighting end point P respectively lie.

Depending on the selection of such a lighting start point N or lighting end point P, the printed circuit board with the IR LED L attached vertically thereto can be inclined in such a way that its light cone 5 lights up a first partial area, in particular a near area, or a second partial area, in particular a far area, of the desired area of the vehicle 1 (in particular the longitudinal side of the vehicle) to be illuminated in the longitudinal direction of the vehicle. As a result, fewer IR LEDs can be used for the near area, for example, since the IR LEDs do not have to light up the vehicle 1 as far as its longitudinal end. The same applies to the IR LEDs of the far area, which light up the vehicle 1 up to the longitudinal end of the vehicle and optionally beyond, but only start lighting from the center of the vehicle and not from the driver's cabin 3.

Fig. 5 shows a purely schematic example of a light cone arrangement of a directional light source. In the case of LEDs and other light sources, there are both directional light sources and omnidirectional light sources. Omnidirectional light sources emit their light relatively evenly distributed in all directions, and directional light sources, such as LEDs, emit their entire luminous flux in only one specific direction. The beam angle β is the angle at which the light from a luminaire is emitted. This forms a light cone. As shown in Fig. 5, the light cone 5 has the vertical cone axis R through the apex S and the center M of the circular base, as well as the mantle with the mantle lines HX, HY. Depending on the angular size, the light cone 5 has a different diameter: the smaller the value, the narrower the light beam. The beam angle β is given in degrees.

The light intensity in the emitted light cone 5 varies. The full light power is reached only in the center M of the light cone 5. The further out you go, the more the brightness of the light decreases. Everything that is lit up with 50% of the light intensity and thus lies in the so-called half-value angle counts as the beam angle β in Fig. 3. The half-value angle thus corresponds to the beam angle β as shown in Fig. 3. In the outer range, which is determined by the so-called field angle 7, the light power is only 10%. This angular range is no longer part of the beam angle β of its light cone 5.

In a preferred embodiment of the invention, as shown in the following Figs. 6-15, the respective IR lamp, in particular IR LED, may be provided with an additional lens or lens device as an optical element of an optical system previously described with reference to Figs. 1 and 2 for bundling the light and reducing the stray light.

Two examples are now shown in Figs. 6 and 7, one for lighting up a near area and one for lighting up a far area of the vehicle of Fig. 4 in the longitudinal direction of the vehicle and in the X direction, respectively, by means of the lighting device according to the invention. The predetermined area to be lit up by the infrared lighting device is divided into the first and second partial areas, with the near area and the far area preferably forming the two partial areas.

The infrared lighting device according to the invention thereby comprises a first printed circuit board 8 with at least one first IR LED 10 attached thereto and a second printed circuit board 9 with at least one second IR LED 11 attached thereto. The printed circuit boards 8 and 9 thereby provide a matrix of a plurality of first and second I-LEDs 10, 11. The infrared lighting device according to the invention can thereby be arranged, for example, within a wing housing in which at least one camera, e.g., an infrared sensitive camera, for recording images, e.g., IR images is accommodated. The at last one camera, e.g., infrared sensitive camera, and infrared lighting device are thereby interconnected via their controls. In this regard, the at least one camera, e.g., infrared sensitive camera, is at least one camera, e.g., infrared sensitive camera, of a camera monitoring system (CMS Camera Montoring System), as previously described with reference to Figs. 1 and 2, and is controlled by the control device of the CMS system. The infrared lighting device in turn has a lighting controller for controlling respective first and second IR LEDs 10, 11 on respective first and second printed circuit boards 8, 9. Both controllers are interconnected, with the control device of the CMS system controlling the at least one camera, e.g. infrared sensitive camera, and the infrared lighting device and its lighting controller.

The infrared lighting device according to the invention need not necessarily be received in a common housing, in this case the wing housing for example, together with the at least one camera, e.g., infrared sensitive camera, of the CMS system and attached to the vehicle. Instead, the infrared lighting device according to the invention can also be attached to the vehicle independently of the at least one camera, e.g., infrared sensitive camera, and the CMS system and connected via its lighting start point to the controller, in this case the control device, of the CMS system and its at least one camera, e.g., infrared sensitive camera.

In Fig. 6, a first partial area, here a near area, of the truck of Fig. 4 is illuminated in the longitudinal direction of the vehicle by the at least one first IR LED 10. The light cone 5 of the first IR LED 10 comprises the beam angle β1 and an emission power I1. As previously explained, the emission power of the IR LED is not specified in candela (Cd), since it is not visible light, but in milliwatts (mW).

The first IR LED 10 in Fig. 6 can optionally be provided with an additional lens or lens device as an example of an optical element of an optical system, for example for bundling the light and reducing the stray light.

The first IR LED 10 is attached vertically to the first printed circuit board 8. The light cone 5 is thus aligned perpendicular to the first printed circuit board 8. Its cone axis R1 accordingly forms an angle of 90° with the first printed circuit board 8, as shown in Fig. 6. The first printed circuit board 8 with the first IR LED 10 mounted thereon is thereby inclined by a vertical angle Θ1XZ, i.e. vertical-close angle Θ1XZ, with respect to the Z-axis and thus the vertical.

Depending on how much the first printed circuit board 8 with the at least one first IR LED 10 is inclined with respect to the vertical or Z axis in the X,Z plane, the at least one first IR LED 10 can light up a predetermined first partial area, in this case a near area, of the truck in the longitudinal direction of the vehicle and thus along the X axis. The vertical angle Θ1XZ can be determined for a near area to be illuminated depending, for example, on a desired lighting start point N1 on the start mantle line HX1 or a desired lighting end point P1 on the end mantle line HY1 of the light cone to provide a desired illumination area of the light cone with its beam angle β1.

In this way, the desired illumination area of the light cone with the beam angle β1 can be set. For this purpose, a point on the ground, for example, is set as the lighting start point N1. In the example in Fig. 4, the point N1 comprises a distance close to the driver's cabin, e.g. the distance XN1 = c1 from the first IR LED, the height ZN1 = 0 and YN1 = 0. The corresponding vertical angle Θ1XZ by which the first printed circuit board with the at least one first IR LED must be tilted so that the lighting start point N1 lies on the light cone and more precisely its start mantle line HX1 can be easily calculated mathematically.

The desired lighting range of the light cone with the beam angle β1 can also be set in which as lighting end point P1 e.g. a point P1 is located in the area of the vehicle center, here at ZP1 = e1 and at a certain vehicle height of e.g. ZP1 = 1m, as shown in Fig. 6. In this case, the lighting start point P1 comprises the predetermined distance XP1 = e1, the predetermined height ZP1 = a = 1m and YP1 = 0. Thus, for example, the center of the vehicle can be lit up at the height of 1m.

The coordinate values for the lighting start point N1 and the lighting end point P1 and the resulting value for the vertical angle Θ1XZ of the first printed circuit board are purely exemplary and the invention is not limited thereto. Depending on the beam angle β1 of the at least one first IR lamp and the far area of the truck to be lit up, the point N1 or point P1 can be selected and the required vertical angle Θ1XZ for the first printed circuit board can be calculated therefrom, in particular using trigonometry.

For the near area, the point N1 lies in a range for XN1 of, for example, XN1 = 3m to 15m in the case of a truck with a maximum length of 25m, where YN1 = 0 and ZN1 = 0.

The light cone of the at least one first IR LED in Fig. 6 extends at the vertical near angle Θ1XZ of the first PCB between the two points N1 and P1 on the mantle lines HX1 and HY1.

In Fig. 7, a second partial area, in this case the far area of the truck from Fig. 4, is illuminated in the longitudinal direction of the vehicle by the at least one second IR LED. The light cone of the second IR LED comprises the beam angle β2 and a predetermined light intensity I2. The second IR LED 11 in Fig. 7 can optionally be provided with an additional lens or lens device as an optical element of the optical system, for example to bundle the light and to reduce the stray light.

The second IR LED 11 is attached vertically to the second printed circuit board 9. The light cone 5 is thus aligned perpendicular to the second printed circuit board 9. Its cone axis R2 accordingly forms an angle of 90° with the second printed circuit board 9, as shown in Fig. 7. The second printed circuit board 9 with the second IR LED 11 mounted thereon is thereby inclined by a vertical angle O2XZ, i.e. vertical far angle O2XZ, with respect to the Z axis and thus the vertical.

Depending on how much the second PCB with the at least one second IR LED is inclined with respect to the vertical or Z axis in the X,Z plane, the at least one second IR LED 11 can light up a predetermined far area of the truck in the longitudinal direction of the vehicle and thus along the X axis.

The vertical angle O2XZ can be determined for a far area to be illuminated depending on, for example, a desired lighting start point N2 on the start mantle line HX2 or a desired lighting end point P2 on the end mantle line HY2 of the light cone to provide a desired illumination area of the light cone 5 with its beam angle β2.

In this way, the desired illumination area of the light cone 5 with the beam angle β2 can be set. For this purpose, a point on the ground, for example, can be set as the lighting start point N2. In the example in Fig. 7, the point N2 comprises a distance in the area of the vehicle end, e.g. the distance XN2 = c2 from the second IR LED, the height ZN = 0 and YN = 0. The associated vertical angle O2XZ by which the second printed circuit board 9 with the at least one second IR LED 11 must be inclined so that the lighting start point N2 lies on the light cone 5 and, more precisely, its start mantle line HX2 can be easily calculated mathematically.

The desired lighting range of the light cone 5 with the beam angle β2 can also be set by selecting as the lighting start point P2, for example, a point P2 in the area of the longitudinal end of the vehicle, at ZP2 = e2 (corresponding to the end of the vehicle) and at a certain vehicle height of, for example, ZP2 = 1m, as shown in Fig. 7. In this case, the lighting start point P1 comprises the predetermined distance XP2 = e2, the predetermined height ZP2 = a = 1m and YP2 = 0. Thus, for example, the longitudinal end of the vehicle can be lit up at the height of 1m.

The coordinate values for the lighting start point N2 and the lighting end point P2 and the resulting value for the vertical angle O2XZ of the second printed circuit board 9 are purely exemplary and the invention is not limited thereto. Depending on the beam angle β2 of the at least one second IR lamp 11 and the far area of the truck to be lit up, the point N2 or point P2 can be selected and the required vertical angle O2XZ for the second printed circuit board can be calculated therefrom.

For the far area, point N2 is in a range for XN2 of XN2 = 15m to 25m, for a truck with a maximum length of 25m, where YN2 = 0 and ZN2= 0.

The light cone 5 of the at least one second IR LED 11 in Fig. 7 extends at the vertical far angle O2XZ of the second PCB 9 between the two points N2 and P2 on the mantle lines HX2 and HY2.

The vertical near angle Θ1zx and the vertical far angle Θ2zx of the first and second printed circuit boards 8, 9 may depend on, for example, the emission power I1 of the at least one first IR LED 10, the emission power I2 of the at least one second IR LED 11, the number of first IR LEDs 10, the number of second IR LEDs 11 attached to the first and second printed circuit boards 8, 9, respectively, the number of second IR LEDs 11 attached to the first and second printed circuit boards 8, 9, respectively. second printed circuit board 8, 9, as well as their first and second beam angles β1 and β2, are selected in such a way that the light cones 5, 5 of the first and second IR LED(s) 10, 11 illuminate the vehicle consistently and uniformly in the longitudinal direction of the vehicle with the same emission power as far as possible, preferably from an area of the driver's cabin to the end of the vehicle in the longitudinal direction of the vehicle.

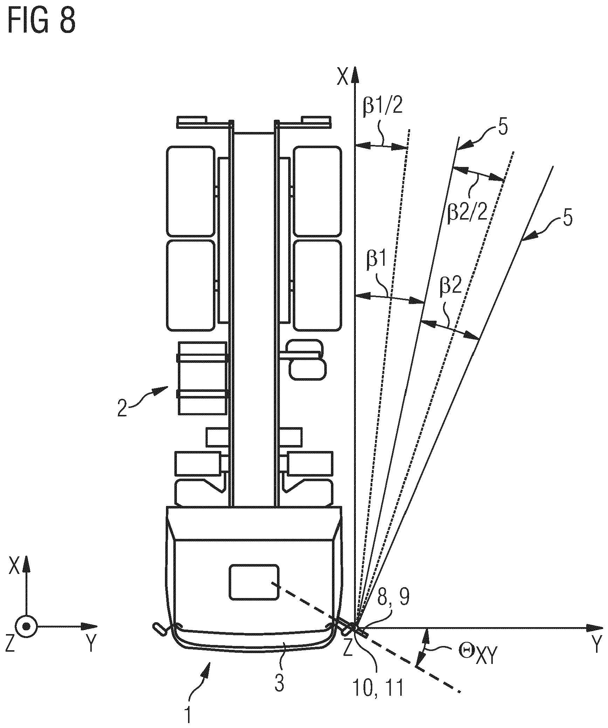

As shown in Fig. 8, in the infrared lighting device according to the invention, the respective printed circuit board 8, 9 with the at least one IR LED 10, 11 attached thereto can additionally be inclined in the X,Y plane by the horizontal angle ΘXY with respect to the X axis or horizontal. In Fig. 8, the truck from Figs. 4, 6 and 7 is shown in a top view.

By tilting the first printed circuit board 8 with its at least one first IR LED 10 with respect to the X-axis or horizontal by the horizontal near angle Θ1XY, a near area on the vehicle can be lit up. In the example in Fig. 8, the light cone 5 of the at least one first IR LED 10 with the beam angle β1 as the near area thereby lights up the area directly along the longitudinal side of the vehicle. The light cone 5 runs with its first mantle line in the longitudinal direction of the vehicle parallel to the truck 1.

By tilting the second printed circuit board 9 with its at least one second IR LED 11 relative to the X axis or horizontal by the horizontal far angle Θ2XY, a far area on the vehicle 1 can be lit up. In the example in Fig. 8, the light cone 5 of the at least one second IR LED 11 with the beam angle β2 as the far area thereby lights up the area adjacent to the near area. The light cone 5 of the second IR LED 11 can thereby touch the light cone 5 of the first IR LED 10 and together with it form a maximum total illumination angle βG = β1 + β2. In this way, for example, the largest possible range of movement of the truck can be comprised, as previously shown in Fig. 3.

The horizontal near angle Θ1XY and the horizontal far angle Θ2XY can also be selected such that the two light cones 5, 5 at least partially overlap, for example.

In addition, at least the horizontal near angle Θ1XY or the horizontal far angle Θ2XY can be selected in such a way that the respective light cone 5, 5 is directed or pivoted further inwards in the direction of the vehicle 1, instead of comprising a parallel path in the longitudinal direction of the vehicle, as in Fig. 8. In this way, if necessary, a part inside the vehicle 1, for example the loading area of the trailer 2 of the truck, can also be lit up by the light cone 5. In principle, it is also conceivable that at least the horizontal near angle Θ1XY or the horizontal far angle Θ2XY are selected in such a way that the respective light cone 5, 5 is directed or pivoted outwards against the direction of the vehicle 1. In this way, a part outside the vehicle 1 can be lit up, as shown in Fig. 8 for the horizontal remote angle Θ2XY.

In Figs. 9 and 10, perspective views of an embodiment of the infrared lighting device 6 according to the invention are shown in each case, with the heat sink 12, 13 of the respective printed circuit board 8, 9 being shown only in Fig. 9 for reasons of clarity. Fig. 11 further shows a side view of the infrared lighting device 6 according to Figs. 9 and 10. The infrared lighting device 6 thereby comprises at least a first printed circuit board 8 with at least one or two first IR LEDs 10, for example five first IR LEDs 10. The first IR LEDs 10 are thereby provided, for example, with an additional lens or lens device 14 for focusing the light and reducing stray light.

Further, the lighting device 6 comprises at least one second printed circuit board 9 with at least one or two second IR LEDs 11, for example five second IR LEDs 11. The second IR LEDs 11 are thereby also provided, for example, with an additional lens or lens device 14 for bundling the light and reducing the stray light.

The respective first and second IR LEDs 10, 11 are attached vertically to the first and second printed circuit boards 8, 9. The cone axis R1, R2 of the first or second IR LED 10, 11 is thus perpendicular to the first or second printed circuit board 8, 9, respectively. Furthermore, in the embodiment at least one, several or all IR LEDs 10, 11 are each provided with an additional lens device 14 as an example of an optical element for bundling the light and reducing the stray light. The respective first IR LED 10 thereby comprises a beam angle β1 and the respective second IR LED 11 comprises a beam angle β2. The beam angles β1, β2 may be identical or different in size. β1 can be larger than β2 or, conversely, β2 can be larger than β1. Likewise, in this context, the respective first IR LED may further comprise an emission power I1 and the respective second IR LED may comprise an emission power I2. The emission powers I1 and I2 may be identical or different in magnitude. I1 may be greater than I2 or vice versa and I2 may be greater than I1, depending on the function and intended use.

The respective first or second printed circuit board 8, 9 is thereby further coupled in each case to a heat sink 12, 13 for dissipating the heat generated by the respective IR LED 10, 11, as shown in Fig. 11. As heat sink 12, 13, for example, at least one plate-shaped heat sink and, in particular, a plate made of a thermally conductive material or material combination, for example made of a thermally conductive metal or metal alloy, in particular aluminum and/or copper, is thereby provided. The heat sink 12, 13 is thereby attached to the rear side of the first or second printed circuit board 8, 9, preferably directly attached thereto. However, the invention is not limited to a heat sink 12, 13 in the form of a thermally conductive plate, any other form of heat sink 12, 13 can be provided which is suitable for dissipating the heat generated by the respective IR LED 10, 11. The plate may be flat as well as provided with additional cooling elements, e.g. cooling fins etc., on at least one side. The heat sink 12, 13 preferably extends over the entire area of the printed circuit board 8, 9 or at least the area of the printed circuit board 8, 9 to which the at least one IR LED 10, 11 is attached and can, for example, lie flat against it.

The first printed circuit board 8 with the respective first IR LED 10 attached vertically thereto is used for lighting up the first partial area, in particular the near area, and the second printed circuit board 9 with the respective second IR LED 11 attached vertically thereto is used for lighting up the second partial area, in particular the far area, of the vehicle, e.g. truck, as described previously with reference to Figs. 3-8.

The first printed circuit board 8 with the respective first IR lamp 10 attached vertically thereto is thereby inclined by a vertical near angle Θ1zx with respect to the vertical (Z axis) and by a horizontal near angle Θ1XY with respect to the horizontal (X axis), for illuminating a first partial area, in particular near area, of the vehicle 1 in the longitudinal direction of the vehicle, as previously described with reference to Figs. 3-8.

In this case, the second printed circuit board 9 with the second IR lamp 11 attached vertically thereto in each case is inclined by a vertical far angle O2xz with respect to the vertical (Z axis) and by a horizontal far angle Θ2XY with respect to the horizontal (X axis), for illuminating a second partial area, in particular far area, of the vehicle 1 in the longitudinal direction of the vehicle, as described previously with reference to Figs. 3-8.

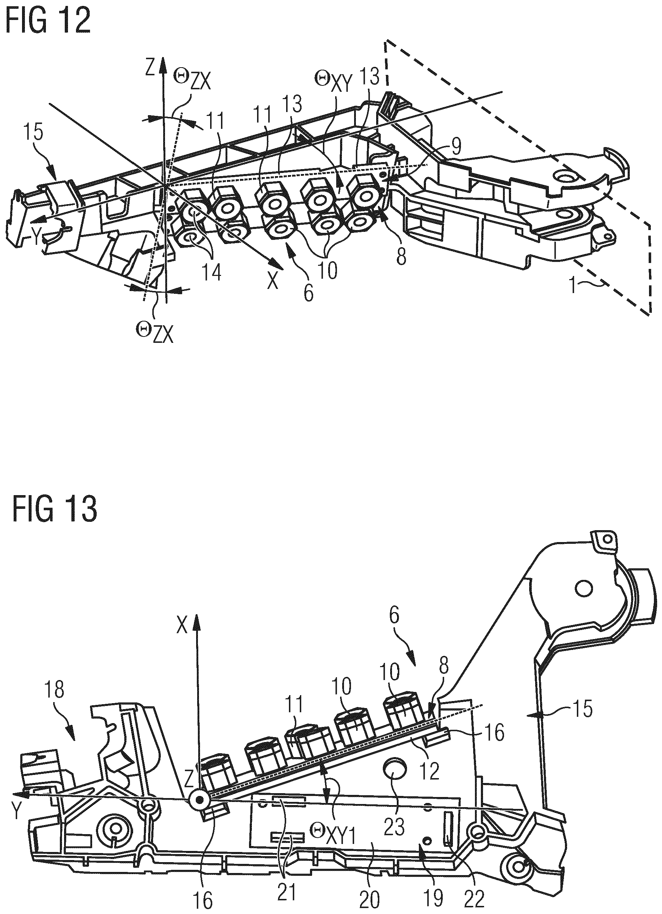

In Figs. 12-15, the infrared lighting device 6 according to the invention is shown as part of a camera monitoring (CMS) system (CMS Camera Montoring System), as previously described by way of example with reference to Figs. 1 and 2. In this regard, the CMS system comprises the at least one camera, e.g. an infrared sensitive camera, for recording the predetermined vehicle area and preferably the predetermined vehicle area illuminated by the infrared lighting device 6 as described previously with reference to Figs. 3-11.

In this regard, Figs. 12-15 show a holder 15 to which the infrared lighting device 6 is attached with its first circuit board 8 having, for example, five first IR lamps 10 and its second circuit board 9 also having, for example, five second IR lamps 11. The two printed circuit boards 8, 9 are thereby fastened, for example, one above the other in the Z direction or in the vertical direction in the installation position on a vehicle. In Fig. 12, a dashed line indicates the attachment to the vehicle 1, e.g. here the longitudinal side of the vehicle. The bracket 15 thus stands like a wing laterally outward or in the Y-direction or transverse direction of the vehicle.

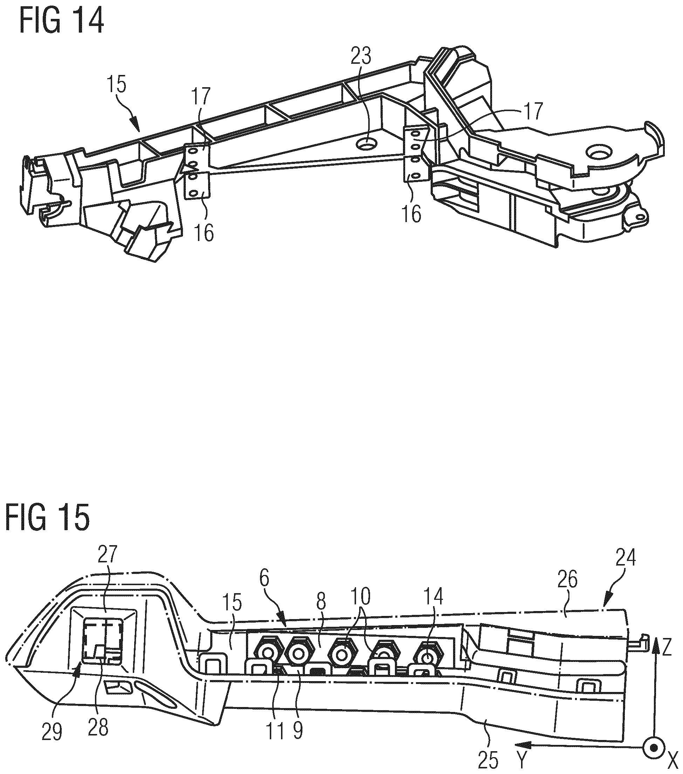

As shown in Figs. 13 and 14, the holder 15 comprises at least two fastening flanges 16, 17 in each case, to which the associated first or second printed circuit board 8, 9 with its heat sink 12, 13 is fastened at the rear. The at least two fastening flanges 16, 17 can be arranged and aligned on the holder 15 in such a way that they already specify the vertical angle OXZ and/or horizontal angle ΘXY of the respective PCB to be fastened thereto.

In Figs. 12-15, the holder 15 comprises a recess in which the mounting flanges 16, 17 are arranged and the printed circuit boards 8, 9 are received for mounting. At the outer end, the holder 15 in the example in Figs. 12-15 also comprises a receptacle 18 for an infrared sensitive camera, in particular the infrared sensitive camera 28 of the CMS system 29. For example, in addition to the at least one camera 28, in particular an infrared sensitive camera 28, the CMS system 29 can comprise further cameras for recording visual images of the vehicle both during the day and at night. On one side, in this case for example the underside of the holder 1, the lighting start point 19 is provided behind the printed circuit boards 8, 9 with their heat sinks 12, 13, as shown in Fig. 13. The lighting controller 19 with its main board 20 comprises an output connector 21 for each of the first and second printed circuit boards 8, 9 with their first and second IR LEDs 10, 11, respectively, as well as an input connector 22 for connection to a controller of the at least one camera, e.g. infrared sensitive camera, in particular the controller of the CMS system and its at least one camera, e.g., infrared sensitive camera. As shown in Fig. 12, the mount 15 further comprises a cable opening 23 for passing cable lines therethrough.

When the first and second circuit boards 8, 9 with their first and second IR LEDs 10, 11, respectively, are separately mounted on the vehicle, each circuit board 8, 9 comprises its own first and second lighting start point, respectively. This first or second lighting controller thereby comprises an input connector for connecting the controller of the camera, e.g., infrared sensitive camera, in particular the controller of the CMS system 29 and its at least one camera 28, e.g., infrared sensitive camera 28. Further, the first or second lighting controller comprises an output connector for the first or second printed circuit board with its first or second IR LEDs, respectively. The respective first and second printed circuit board with its first and, respectively, second lighting controller is arranged on a first and, respectively, second holder in a first and, respectively, second housing.

In Fig. 15, the holder 15 with the lighting device 6 is accommodated in the associated housing 24, for example a wing housing that is attached to the driver's cabin, for example, and protrudes laterally from the vehicle like a wing. The housing 24 thereby comprises a housing shell 25 which is closed by a housing cover 26. At its outer end, the housing 24, for example its housing shell 25, comprises a camera opening 27 for the camera 28, e.g., infrared sensitive camera 28 and optionally, for example, at least one further camera of the CMS system 29. The housing cover 26 is transparent to the infrared radiation of the IR LEDs 10, 11 of the two printed circuit boards 8, 9, at least in the region of the IR LEDs 10, 11.

The infrared lighting device 6 may be coupled to a camera monitoring system (CMS) 29 comprising at least one camera 28, e.g., an infrared sensitive camera 28, as previously described. The CMS system 29 may determine, based on a detected vehicle ambient brightness, that the vehicle ambient brightness is no longer sufficient, for example at advanced dusk, at darkness, or a vehicle shadow, and therefore control the infrared lighting device 6 to light up the vehicle in the field of view of the camera 28, in particular infrared sensitive camera 28, by means of its IR LEDs 10, 122 in a predetermined area in the longitudinal direction of the vehicle.

The CMS system 29 can thereby, for example, depending on at least one parameter such as a desired emission power of the infrared lighting device 6, a size of the predetermined area to be illuminated and/or a size of the respective at least first and second partial areas of the predetermined area to be illuminated of the vehicle, control the lighting device to at least switch on or off and/or dim a suitable number of the plurality of first and second IR lamps 10, 11. For example, at least one of the five first IR LEDs 10 of the first circuit board 8 may be sufficient to light up the first partial area of a predetermined area of the vehicle to be illuminated. Similarly, of the five second IR lamps 11 of the second circuit board 9, for example, four of the second IR LEDs 11 may be sufficient to light up the second partial area of the predetermined area of the vehicle to be illuminated. Depending on at least one of the aforementioned parameters, the CMS system 29 can control the infrared lighting device 6 in such a way as to, e.g., alternately always switch on or off or dim a predetermined number and/or predetermined pairing of several of the first IR LEDs 10, respectively, and/or to alternately always switch on or off or dim a predetermined number and/or predetermined pairing of several of the first IR LEDs 11, respectively, of all the second IR LEDs 11.

As previously described with reference to FIGS. 1 and 2, the image processing device of the CMS system 29 can use at least one object recognition algorithm to determine a person in a light cone of an IR lamp, in this case the respective first IR lamp 10 and/or second IR lamp 11, and additionally a distance of the person to this respective IR lamp, here the first IR lamp 10 or second IR lamp 11.The CMS system 29 can switch off or dim down the respective first or second IR lamp 10, 11 of the first or second printed circuit board 8, 9, respectively, if the image processing device described above with reference to Fig.1 and 2 detects a person or living being in the light cone of this IR lamp and preferably a distance of the person or living being from this IR lamp falls below an assigned eye safety distance. Furthermore, the CMS system 29 can switch on or dim up this IR lamp again as soon as no person is detected in the light cone anymore or the person detected in the light cone comprises a distance to this IR lamp that is equal to or greater than the assigned eye safety distance.

This can prevent unintentional blinding of the person or living being by the infrared light of the respective IR LED 10, 11 of the infrared lighting device 6, which is not visible to the person or living being, if the person or living being is standing too close to the IR lamp 10, 11 in its light cone. In this case, CMS system 29 turns off or dims down the respective IR LED to an allowable emission power and turns it back on or dims it up to an output emission power once the person or living being has stepped out of the light cone of the IR LED or resumes the eye safety distance specified for the IR LED.

Although the present invention has been fully described above with reference to preferred embodiments, it is not limited thereto, but is modifiable in a variety of ways. In particular, the infrared lighting device is not limited to two first and second circuit boards each having five first and second IR LEDs. Instead, one or more first circuit boards may be provided each comprising at least one, two, three, four, five, or a plurality of first IR LEDs, depending on the function and intended use. Similarly, one or more second printed circuit boards may be provided each comprising at least one, two, three, four, five or a plurality of second IR LEDs, depending on the function and intended use. This applies to all embodiments of the invention as previously described with reference to Figs. 1-15. The embodiments previously described with reference to Figs. 1-15 can also be combined with each other, in particular individual features thereof.

### LIST OF REFERENCES SIGNS

- 1: vehicle
- 2: trailer
- 3: driver's cabin
- 4: housing
- 5: light cone
- 6: infrared lighting device
- 7: field angle
- 8: first printed circuit board
- 9: second printed circuit board
- 10: first IR lamp
- 11: second IR lamp
- 12: first heat sink
- 13: second heat sink
- 14: lens device
- 15: mounting bracket
- 16: first mounting flange
- 17: second mounting flange
- 18: mounting for infrared sensitive camera
- 19: lighting controller
- 20: main board
- 21: output connector
- 22: input connector
- 23: cable opening
- 25: housing
- 25: housing shell
- 26: housing cover
- 27: camera opening
- 28: camera
- 28*: external camera
- 29: CMS system
- 30: control device
- 31: image processing device
- 32: memory
- 33: computing and controlling device
- 34: IR lamp
- 35: optical element
- 36: image sensor
- 37: object recognition device
- 38: image of the infrared sensitive camera
- 39: display device
- 40: localized object

## Claims

1. A camera monitoring system (CMS) (29) for a vehicle, comprising:
at least one camera (28) configured to record a scene in a field of view (FOV) of the at least one camera (28);
an image processing device configured to identify an object, in particular a living being or a person, in the scene recorded by the at least one camera; and
a control device configured to provide information to be used for control of an infrared lighting device configured to emit infrared light to light up the scene in the field of view (FOV) of the at least one camera (28) in such a way that infrared light illuminating an object upon identification of the object is reduced to at least one predetermined permissible emission power and/or is deflected away from the object.

2. Camera monitoring system (CMS) according to claim 1, further comprising a coupling device configured to be coupled to at least one further, in particular external, camera which is configured to record a further scene in a further field of view (FOV-2);
wherein the at least one camera and the at least one further camera are arranged such that their fields of view (FOV, FOV-2) are aligned on a common point or area of interest.

3. Camera monitoring system (CMS) according to claim 2, wherein the image processing device is configured to identify an object in the further scene, in particular for verification of an identification of an object.

4. Camera monitoring system (CMS) according to claim 2 or 3,
wherein the at least one further camera is configured to provide additional distance information for the identified object;
wherein the image processing device is configured to determine a distance of the identified object from the infrared lighting device based on the distance information; and
wherein the control device is configured to provide information to an infrared lighting device in such a way that the intensity of infrared light emitted by the infrared lighting device illuminating the identified object is reduced if the determined distance is equal to or smaller than a predetermined distance.

5. Camera monitoring system (CMS) according to any one of claims 2 to 4, wherein the image processing device is configured to determine a select region of the identified object, in particular whether the identified object comprises a face and/or whether a direction of view of the object necessitates reduction or deflection of infrared light illuminating the object to avoid blinding of the object.

6. Camera monitoring system (CMS) according to any one of the preceding claims, further comprising an infrared lighting device coupled to the control device and comprising at least one infrared,IR, lamp,
wherein the control device is configured to control the infrared lighting device in such a way that the intensity of infrared lightis reduced to the predetermined intensity by the at least one IR lamp being switched off and/or, especially partly, dimmed down.

7. Camera monitoring system (CMS) according to claim 6, wherein the infrared lighting device comprises at least one optical system associated with the at least one infrared lamp,wherein the control device is configured to control the infrared lighting device in such a way that the intensity of infrared light emitted by the infrared lighting device illuminating the identified object is reduced by adjusting the at least one optical system.

8. Camera monitoring system (CMS) according to claim 7, wherein the optical system is configured to deflect infrared light away from an identified object and the control device is configured to control the infrared lighting device in such a way that the intensity is reduced by deflecting infrared light emitted by the at least one infrared lamp away from the identified object by means of the optical system.

9. Camera monitoring system (CMS) according to any one of the preceding claims, wherein the at least one camera (28) comprises an image sensor having a plurality of pixel and the image processing device is configured to distinguish and process information provided by different pixel.

10. Camera monitoring system (CMS) according to claim 9, wherein the infrared lighting device (6) comprises a plurality of IR lamps (34, 10, 11) arranged in a matrix;
wherein each IR lamp (34, 10, 11) is associated with a pixel or a cluster of pixels of the image sensor (36);
wherein the image processing device is configured to determine in which pixel or cluster of pixel the identified object is located; and
wherein the control device is configured to switch off and/or dim down the respective IR lamp associated with the pixel or the cluster of pixels in which the identified object is located.

11. Camera monitoring system (CMS) according to one of the claims 9 or 10, wherein the at least one camera is configured to provide distance information for each pixel of the image sensor;
wherein the image processing device is configured to determine a distance of the identified object from the infrared lighting device based on the distance information supplied for each pixel of the image sensor; and
wherein the control device is configured to provide information to control the infrared lighting device in such a way that the intensity of infrared light illuminating the identified object is reduced if the determined distance is equal to or smaller than a predetermined distance.

12. Camera monitoring system (CMS) according to claim 10, wherein the infrared lighting device (6) comprises:
a first printed circuit board (8) comprising at least one first IR lamp (10) attached thereto, wherein the at least one first IR lamp (10) comprises a first beam angle (β1) and a first emission power (I1),
a second printed circuit board (9) comprising at least one second IR lamp (11) attached thereto, wherein the at least one second IR lamp (11) comprises a second beam angle ((32) and a second emission power (I2),
wherein the first printed circuit board (8) is arranged in such a way that infrared light emitted by the at least one first IR lamp illuminates a first partial area, in particular near area, of the vehicle (1) in a longitudinal direction of the vehicle, and
wherein the second printed circuit board (9) is arranged in such a way that infrared light emitted by the at least one second IR lamp illuminates a second partial area, in particular a far area, of the vehicle (1) in the longitudinal direction of the vehicle.

13. Camera monitoring system (CMS) according to claim 12, wherein the first printed circuit board and/or the second printed circuit board comprises at least one heat sink (12, 13) on its rear side for dissipating the heat generated by the respective IR lamp (10, 11) provided on the front side of the printed circuit board (8, 9), wherein the heat sink is in particular a flat, in particular plate-shaped, heat sink (12, 13) and is made of a thermally conductive material or material combination, in particular a thermally conductive metal or metal alloy.

14. Vehicle (1), in particular truck, passenger car, van or bus, with a camera monitoring system (CMS) according to one of the preceding claims 2-13, wherein the camera monitoring system (CMS) and an infrared lighting device (6) are arranged on the vehicle in such a way that the field of view (FOV-1) of the at least one camera (28) and/or the further field of view (FOV-2) of the at least one further camera comprises at least one longitudinal side of the vehicle, and wherein the camera monitoring system (CMS) (29), the at least one camera (28), the at least one further camera and the infrared lighting device (6) are arranged independently of one another at different vehicle positions or are arranged in a common housing, in particular a wing housing.

15. Method for controlling a camera monitoring system (CMS), in particular a camera monitoring system according to any one of claims 1 to 13, the method comprising the steps of:
lighting up at least one field of view of at least one camera by means of infrared radiation of an infrared lighting device;
recording a scene in the field of view of the at least one camera;
identifying an object in images of the scene recorded by the at least one camera; and
reducing the infrared light illuminating the object to at least one predetermined permissible emission power and/or deflecting the infrared light illuminating the object away from the object.
